# EUROPEAN PATENT APPLICATION

(11) **EP 4 714 643 A1**
(43) Date of publication of application: **25.03.2026**
(21) Application number: 24201254.0
(22) Date of filing: 19.09.2024
(51) Int. Cl.: B29C 70/74, B29C 70/86, B29D 99/00

(54) **METHOD FOR JOINING AT LEAST TWO COMPONENTS AND STIFFENED COMPONENT MANUFACTURED THEREBY**

(71) Applicant: AIRBUS Operations GmbH, 21129 Hamburg (DE); Siempelkamp Maschinen- und Anlagenbau GmbH, 47803 Krefeld (DE)
(72) Inventor: Jörn, Paul, 21129 Hamburg (DE); Köhler, Filipp, 21129 Hamburg (DE); Finger, Lennart, 21129 Hamburg (DE); Schwickert, Jörg, 21129 Hamburg (DE); Köffers, Fabian, 47803 Krefeld (DE); Schöler, Michael, 47803 Krefeld (DE)
(74) Representative: Marschall, Stefan

(57) **Abstract**

The invention relates to an in-situ thermoforming and (co-)consolidation, wherein a pre-deformation of a plastic-based component (2) in order to correspondent to a contour of a component (1) to be joint with can be omitted, as the adaption of the component (2) to the contour of the component (1) to be joint with is done directly before the joining step with the other component in the same tooling (12, 13) by adapting process parameters such as heat and pressure.

## Description

The present invention relates to a method for joining at least two components, wherein at least one component comprises at least a binder system, which is in particular reactable under temperature, and a manufactured component.

Several processes for manufacturing stiffened components, especially in aircraft construction, are known from the prior art. In most cases, the component to be stiffened and the stiffening component are fabricated separately and then joint together. If composite components are involved, this know method is complex. For instance, if a ramped aircraft skin (panel) with a joggled stringer should be fabricated, the stringer must be preformed due the correct geometry and subsequently attached to the ramped skin. This may be done either via welding, bonding, riveting or co-consolidation, in both cases the positioning of the stiffener is important. The preforming is an additional process step that is needed for the stiffener manufacturing and will create additional cost in the process.

It is therefore the object of the present invention to provide a method for joining a composite component to a dimensionally stable component, which enables a simple and time-saving connection, and a stiffened component produced by less manufacturing steps.

The object is achieved by a method with the features of claim 1 and by a stiffened component with the features of claim 9. Advantageous embodiments are disclosed in the dependent claims, the description and the Figures.

The invention relates to a method of joining at least two components, comprising the following steps: providing a first component which is dimensionally stable before processing and which has a first joining surface, providing a second component, comprising at least a binder system, which is in particular reactable under temperature, which is dimensionally stable before processing and which has a second joining surface that is at least partially different from the shape of the first joining surface of the dimensionally stable component, placing the first component and the second component between a lower pressing tool part and an upper tool part, deforming the second component so that the second joining surface follows the shape of the first joining surface of the first component by applying pressure and heat, and joining the second and the first components by applying pressure and heat.

The first component may be, for example, a part of a body part, especially an aircraft wing or fuselage, which may be made from the same plastics material as the second component or from a different plastics material as the second component. Even metallic materials such as aluminum or an aluminum alloy are applicable for the first component. Both is applicable, for instance, the first component is a fuselage skin and the second component is a stringer stiffening the skin element. However, it is also possible that the first component is a stringer and the second component is a fuselage skin element. The components themselves can have a multilayer structure or a single resin matrix reinforced by fibres. The invention can be used in all applications where a joggled or formed stringer is needed to be consolidated on a body part especially on a, especially ramped, aircraft skin. Ramped skins or skins including patches are very common in aircraft design, in applications such as a fuselage, doors, flight control surfaces, essentially everywhere where a stiffened skin is usually needed. "Dimensionally stable" before processing means that the components have a rigid shape/contour when they are laid up between the tool parts. During processing, i.e. when pressure and heat is applied, at least the second components is softened that it can be deformed without any cracks, for instance.

The inventive methods enable an in-situ thermoforming and (co-)consolidation, thus resulting in a reduction of the manufacturing effort. An additional process step during the manufacturing of the component, in particular in order to preform it to the shape required by the first component, is not needed, which will save process time, cost and tooling cost. The deformed second component is adjusted perfectly to the geometry of the dimensionally stable component, mitigating any positioning or tolerancing issues. Another advantage of this process is that a standardized component can be used as a second component, as it is adapted to the respective first component by deformation directly. Prefabrication of precisely fitting components is therefore not necessary. This simplifies and shortens the manufacturing process. The described method can also be used for the production of stiffened components in boat building or automotive engineering.

Advantageously, the component can be a stiffener such as a straight Z-shaped stringer, wherein the first component can have at least one ramp and/or step. The first component and the component can be positioned between the first tool part and the second tool part, wherein the first tool part and/or the second tool part can have a counter contour to the ramp of the first component, so that when the tool parts are closed (pressed together) and the component is heated up to a first predetermined temperature, the component can be deformed and adapted to the shape of the first component. By further heating up to a second predetermined temperature, the deformed component can be joined to the first component.

The first component may have one or more ramps, steps, protrusions or other deformations such as depressions. Consequently, pressing the two pressing tools together deforms the component such that its shape follows the shape of the first component.

In one embodiment, the component is heated up to its melting phase or nearly to its melting phase, wherein an applied pressure is kept constant or nearly constant. By means of this, the component is prepared for plastic deformation, whereas the deformation has not started yet. The component is ready for deformation, but its initial shape is still maintained.

Advantageously, a first pressure between 2 bar and 5 bar can be applied at room temperature, preferably between 18°C bis 23°C but even a room temperature up to 40°C is conceivable, whereby the component can be heated to the first temperature of between 260 °C and 300 °C, preferably 280 °C. Thereby, the pressure can be increased slowly, for instance over a period of time of at least 1 minute, and uniformly up to a maximum pressure between 12 bar and 25 bar, preferably of 15 bar, so that meanwhile the component can be plastically deformed and its second joining surface is adapted to the shape of the its first joining surface of the first component. Then the temperature can be increased to a second temperature of between 350 °C and 380 °C, preferably 365 °C, and the second temperature can be maintained between 15 minutes and 30 minutes to join the component to the dimensionally stable component. The first temperature of 280 °C correspondence with the beginning of a melt phase of the used material. Then, at the higher second temperature of 365 °C, inter diffusion of their molecular chains takes place, in particular if the first component is also made from materials. It should be noted that the temperatures can vary from one resin to another resin. According to this, a process is defined which allow the material to slowly form under a certain pressure at just the right temperature, so that a thermoforming of the component such as a straight stringer to a joggled stringer works. Afterwards, the temperature is raised to perform a co-consolidation of the components such as an aircraft skin to form a stiffened panel.

In order to prepare the demolding of the fabricated stiffened part, the second temperature is reduced slowly, for instance 10K/min, and uniformly to a cooling temperature of at least 140 °C. The pressure can be reduced slowly, for instance over a period of time of at least 10 minutes, and uniformly from 15 bar to 0 bar. Finally, the two tool parts are opened and the manufactured component consisting of the joined second component and the first component can be removed. As a result, the temperature is uniformly lowered to the cooling temperature. This prevents possible mechanical stresses within the component. After cooling, the stiffened component (fabricated stiffened part) can be removed from the pressing tools. Advantageously, the second component can be Z-shaped with a central strip that can be arranged parallel to a pressing direction of the two tool parts. The Z-shaped stiffener has the advantage that, in particular, the stiffness perpendicular to the contact surface of the first component is increased. However, the Z-shaped stiffener allows slight deformation when the first temperature is reached, without wrinkling or buckling of the stiffener.

Advantageously, the first component can have a ramp. As a result, the second component only has to be deformed to the same angle. With this small deformation, wrinkling of the second component is avoided. Exemplary ramps have a gradient ratio of 1:15 and 1:20 which means a ramp angle between 3° to 4°.

Advantageously, the tool parts can be dimensionally stable or can be a flexible membrane that transfers pressure to the second component and/or the first component by means of a pressure container containing a pressure medium such as oil. The pressure medium is being heated in the pressure container to achieve the desired process temperatures, in particular the second temperature. The flexible membrane has the advantage that a uniform pressure force perpendicular to the respective surface of the flexible membrane is achieved. As a result, for example, a hemispherical form of the first component and/or the second component can be compressed perpendicular to the respective surface rather than in one direction only, as is the case with stable tool parts. In this way, better deformation and adaptation of the second component can be achieved.

Advantageously, during deforming and joining the second component can be supported laterally by means of stabilizing element (core element, supporting element) so that the second component does not wrinkle or buckle when the second component is deformed. By means of such stabilizing element, the process time can be reduced as the deformation can be accelerated.

An inventive stiffened component (stiffened part) is manufactured according to the inventive manufacturing method described above, wherein the second component is a stiffener such as a stringer, rib or patch and the dimensionally stable component is an aircraft panel, a wing panel, a door frame etc.

Preferably, the second component is plastic based, in particular made of a thermoplastic or thermoset material. These materials have defined material characteristics enabling an easy processing.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each Figure. Shown is schematically in
- Figure 1:: a side view of an exemplary inventive arrangement in an initial state;
- Figure 2:: an axial view of the arrangement from the right; and
- Figure 3:: a side view of the arrangement in a final state.

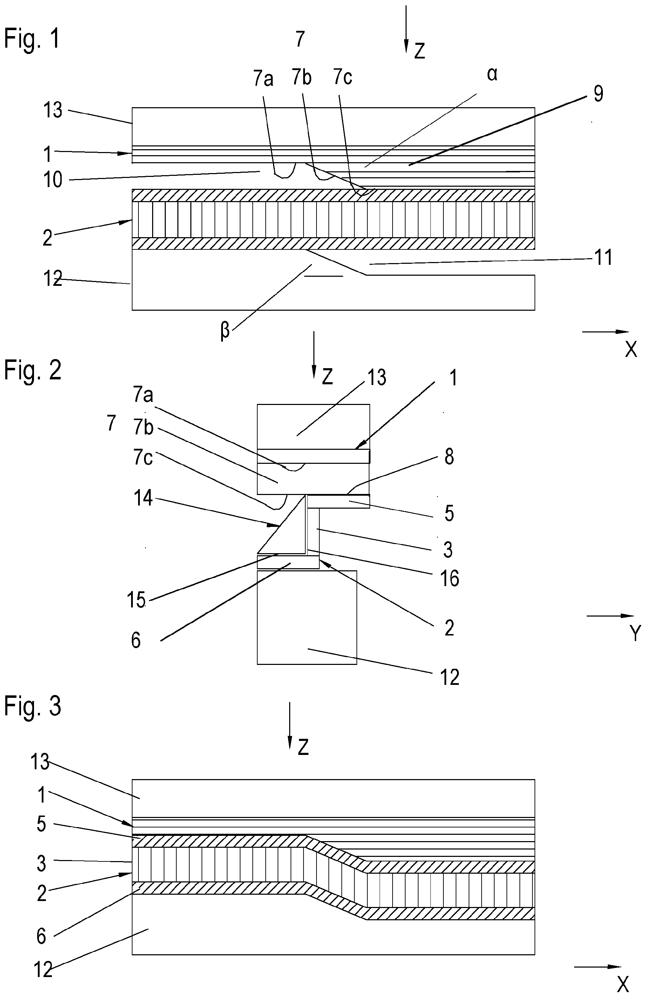

Fig. 1 shows a schematic diagram illustrating an inventive method for deforming and simultaneously joining a first component 1 and a second component 2. In the example shown here, the first component is an aircraft skin and the second component 2 represents a Z-shaped stringer for stiffening the skin in longitudinal direction x. Here, in this embodiment, both components 1, 2 are made from a thermoplastic material. Before processing, both components 1, 2 are dimensional stable. Alternatively, at least one of them is made of a thermoset material or at least one of them is made of a metal or metal alloy such as an aluminum alloy. They can be made as a laminate of the same or different material layers, for instance carbon-fibre layers and metallic layers, or as component having a resin matrix which is reinforced by fibres.

As shown in Figure 2, the second component 2 has a vertical web 3 extending in vertical direction z which is the pressure direction, a bottom flange 5, and a top flange 6. Before deformation, the thermoplastic component 2 is straight (initial straight shape).

The first component 1 has a first joining surface 7 and the second component 2 has a second joining surface 8, provided on its bottom flange 5. The joining surfaces 7, 8 are provided for joining the two components 1, 2 together. The joining surfaces 7, 8 are arranged one of the other in pressing direction Z.

As shown in Figure 1, the first joining surface 7 of the first component 1 is ramped by an angle α less than 45° such that it has a lower portion 7a and inclined portion 7b and an upper portion 7c. In other words, the dimensionally stable component 1 has on its joining side a ramp 9.

The second joining surface 8 of the second component 2 has a contour that is different to the contour of the first joining surface 7. Here, the second joining surface 8 is straight. However, also a concave or a convex shape is possible.

By positioning the components 1, 2 one of the other, the first component 2 rests with the upper portion 7c of its first joining surface 7 on the second joining surface 8 of the second component 2, whereas the second component 2 is spaced apart from the first component 1 in the area of the inclined portions 7b and the lower portion 7a. Thus, before deforming, a gap 10 is formed between the second joining surface 8 and the inclined portion 7b and the lower portion 7a of the first joining surface 7.

With reference to Figure 1, deforming and joining of the components 1,2 are done in a single pressing tool comprising a lower tool part 12 and an upper tool part 13. In their closed state, the tool parts 12, 13 form a cavity inside which the components 1, 2 are processed. For processing, the first component 1 and the second component 2 are arranged between them, wherein in the example shown here the first component 1 is positioned on the second component 2. This means, the second component 2 is arranged on the lower tool part and deformed by moving the first component 1 downwards via the upper tool part 12.

The lower tool part 12 is rigid and has a ramp-shaped protrusion 11 with a tool angle β that is identical with the ramp angle α. As shown in Figures 1 and 3, the first component 1 is thus positioned between the tool parts 12, 13 that the ramp-shaped protrusion 11 is positioned in pressing direction Z opposite to the inclined portion 7b and the upper portion 7c of the first joining surface 7 of the first component 1.

The upper tool part 13 comprises several elements, from which only a flexible membrane is shown. The membrane can be pressed downwards by a pressure medium such as an oil. In order to reach required process temperatures, the pressure medium can be heated. It should be noted that executing the inventive method is not limited to such membrane tooling.

As illustrated in Figure 2, in order to stabilize the second component 2 during deforming, a core element 14 is provided for each second component 2. The core element 14 extends in longitudinal direction and supports the second component 2 laterally. Here, the core element 14 has triangular shape. With its horizontal side 15, it rests on the bottom flange 6. With its side 16 which is perpendicular to the horizontal side 15, it is in surface contact with the web 3.

The components 1, 2 are heated by means of a not shown heating device to a first temperature indicating a melt phase of the second component 2. Here, the first temperature is 280 °C. A pressure is kept at a constant level, for instance 4 bar or 5bar.

Then, the pressure acting on the second component 2 is slowly, for instance over a period of time of at least 1 minute, and uniformly increased up to a maximum pressure, here 15 bar (indicated by the arrow 12) During this step, the second component 2 is plastically deformed and adapted to the shape of the first component 1.

With reference to Figure 3, during deformation, the second component 2 is pressed downwards until it follows the ramped shape of lower tool part 12 such that the gap 10 the closed and the second component enters the protrusion 11. This means, the second joining surface 8 is fully in contact with the first joining surface 7, not only with upper portion 7c, but also with the inclined portion 7b and the lower portion 7a of the first joining surface 7. The non referenced portion of the second joining surface 8 that is already in contact with the upper portion 7c of the first joining surface 7 before processing, remains basically unchanged.

After the second component 2 has been fully deformed, a joining step (co-consolidation step) is started. The temperature is raised to a second temperature, here to 365°. The second temperature is maintained for a period of time between, here 20 minutes and 30 minutes, so that the second component 2 and the first component 1 are joined on molecular basis along their joining surfaces 7, 8.

After the joining step, the demolding of the manufactured part (stiffened first component) is prepared. Therefore, the manufactured part is cooled down slowly, for instance over a period of time of some minutes, for instance at least 3 minutes, and uniformly to a cooling temperature of at least 140 °C. The pressure is reduced slowly, for instance over a period of time of at least 1 minute, and uniformly from 15 bar to 0 bar. Finally, the two tool parts 12, 13 are opened to remove the manufactured part and the core elements 14 out of the cavity.

It is noted that the temperatures, pressures and period of times depends on the thermoplastic material of the second component. The values given here are exemplary given and can vary from one thermoplastic material to another thermoplastic material.

The invention relates to an in-situ thermoforming and (co-)consolidation, wherein a pre-deformation of a plastic-based component in order to correspondent to a contour of a component to be joint with can be omitted, as the adaption of the component to the contour of the component to be joint with is done directly before the joining step with the other component in the same tooling by adapting process parameters such as heat and pressure.

### List of reference signs

- 1: first component
- 2: second component
- 3: middle web
- 4: pressure direction
- 5: bottom flange
- 6: upper flange
- 7: first joining surface
- 7a: lower portion
- 7b: inclined portion
- 7c: upper portion
- 8: second joining surface
- 9: ramp
- 10: gap
- 11: ramp-shape protrusion
- 12: lower tool part
- 13: upper tool part
- 14: core element (stabilizing element)
- 15: horizontal side
- 16: perpendicular side

- α: ramp angle
- β: tool angle

- X: longitudinal direction
- Y: horizontal direction
- Z: vertical direction

## Claims

1. Method for joining at least two components, comprising the steps:
• Providing a first component (1) which is dimensionally stable before processing and which has a first joining surface (7);
• Providing a second component (2), comprising at least a binder system, which is in particular reactable under temperature, which is dimensionally stable before processing and which has a second joining surface (8) that is at least partially different from the shape of the first joining surface (3) of the first component (1),
• Arranging the first component (1) and the second component (2) between a lower tool part (12) and an upper tool part (13),
• Applying pressure and heat to the components (1, 2) such that
o the second component (2) is deformed so that the second joining surface (8) is adapted to the shape of the first joining surface (7), and
o the components (1) are joined together.

2. Method according to claim 1, wherein during heating up the second component (2) to its melt phase or nearly to its melt phase, an applied pressure is kept constant or nearly constant.

3. Method according to claim 1 or 2, wherein by means of the two tool parts (12, 13) a first pressure between 2 bar and 5 bar is applied at room temperature, wherein the second component (2) is heated to the first temperature of between 260 °C and 300 °C, wherein the pressure is increased up to a maximum pressure between 12 bar and 25 bar, so that meanwhile the second component (2) is plastically deformed and its second joining surface (8) is adapted to the shape of the first joining surface (7) of the first component (1), wherein the second component (2) is increased to the second temperature of between 350 °C and 380 °C and the second temperature is maintained between 15 minutes and 30 minutes to bond the second component (2) to the first component.

4. Method according to any one of claims 1-3, wherein the second temperature is reduced to a cooling temperature of at least 140 °C, wherein the pressure is reduced from 15 bar to 0 bar.

5. Method according to any one of claims 1-4, wherein the second component (2) is Z-shaped with a central web (3) arranged parallel to a pressing direction (12) of the two tool parts (12, 13).

6. Method according to any one of claims 1-5, wherein the first component (1) comprises a ramp (9).

7. Method according to any one of claims 1-6, wherein the lower tool part (12) and/or the upper tool part (13) is stable or is a flexible membrane that transfers the pressure to the second component (2) and/or the first component (1) by means of a pressure container with a pressure medium such as oil, wherein the pressure medium is heated in the pressure container to achieve the desired process temperatures.

8. Method of any one of claims 1-7, wherein the second component (2) is laterally supported by means of stabilizing elements (14).

9. Method of any one of preceding claims, wherein the second component (2) is plastic based, in particular made of a thermoplastic or thermoset material.

10. Stiffened component manufactured by the manufacturing method according to claim 1-9, wherein the second component (2) is a stiffener and the first component (1) is an aircraft panel or a wing panel.
